(19) Europäisches Patentamt
European Patent Office
Office européen des brevets

(11) Publication number: **0 092 755**
**B1**

(12) **EUROPEAN PATENT SPECIFICATION**

(45) Date of publication of patent specification: **09.07.86**

(51) Int. Cl.$^4$: **C 07 F 7/00,** C 08 L 5/14 // E21B33/138, E21B43/25

(21) Application number: **83103706.4**

(22) Date of filing: **16.04.83**

# (54) Bis alkyl bis(trialkanolamine)zirconates.

(30) Priority: **22.04.82 US 371022**

(43) Date of publication of application:
**02.11.83 Bulletin 83/44**

(45) Publication of the grant of the patent:
**09.07.86 Bulletin 86/28**

(84) Designated Contracting States:
**AT BE DE FR GB IT NL SE**

(56) References cited:
**US-A-2 894 966**
**US-A-2 978 347**
**US-A-3 028 297**

(73) Proprietor: **KAY-FRIES, Inc.**
**Stony Point New York 10980 (US)**

(72) Inventor: **Rummo, Gregory J.**
**51 Cross Street, Apt. 2D**
**Bronxville New York 10708 (US)**
Inventor: **Startup, Robert**
**RD1 Box 450 B**
**Bloomingburg New York 12721 (US)**

(74) Representative: **Müller-Gerbes, Margot, Dipl.-Ing. et al**
**c/o Firma DYNAMIT NOBEL AKTIENGESELLSCHAFT -Patentabteilung-**
**Postfach 1209**
**D-5210 Troisdorf/Bez.Köln (DE)**

**EP 0 092 755 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the synthesis of stabilized bisalkyl bis(trialkanol amine)zirconates in liquid form and the use of such zirconates as thickeners for fluids used in resource recovery operations, such as by incorporating the product zirconates described herein in drilling muds, consolidation fluids or fracturing fluids.

According to the invention, product zirconates are obtained from tetraalkyl zirconates and amino alcohols without applying external heat. The resultant products, when utilized as described herein as thickening agents for fluids used in resource recovery operations, e.g., aqueous solutions of hydroxypropylguar, effect an increase in the viscosity of the fluids.

In United States Patent No. 2,894,966, issued July 14, 1959, Russell notes that aminoalcohol titanates and zirconates have been found useful in various textile and cosmetic applications and in other fields. He teaches that most such compounds may be soluble in aqueous media around a neutral pH but that they tend to hydrolyze or decompose at pH's above about 9, and discloses a method of stabilizing such compounds against undesired reactivity by reacting said compounds with polyhydric alcohols, including monosaccharides.

Bostwick, in United States Patent No. 2,824,114, issued February 18, 1958, teaches the reaction of, among other things, triethanolamine and tetrabutyl zirconate to obtain a polymeric product. He also teaches that ortho and condensed ortho esters of zirconium, such as products of the formula $Zr(OR)_4$, where R is an organic radical including alkyl, may be reacted with, inter alia, triethanolamine, to form water-stable chelated amino alcohol esters of zirconium. He suggests that such compounds are useful as surface active agents for pigments, hydrocarbons, and waxes.

In United States Patent No. 2,978,347, issued April 4, 1961, Koehler *et al.* disclose, among other things, the preparation of surface active agents for use as pigment dispersants comprising organo metallic derivatives of zirconium. Among such derivatives are alkyl triethanolamine zirconates, including diethyldi-(triethanolamine)zirconate and diisopropyldi(triethanolamine)zirconate. The former is prepared by refluxing tetraethyl zirconate with triethanolamine and the latter by heating a complex of tetraisopropyl zirconate and isopropyl alcohol with triethanolamine. The product compounds are said to be soluble in $CCl_4$, ethanol and water.

Barfurth *et al.,* in United States Patent no. 4,313,851, dates February 2, 1982, disclose the stabilization of a solution comprising diisopropoxy bis(2,4-pentanedionato)titanium with water.

According to the present invention a new method for the preparation of stabilized bisalkyl bis-(trialkanol amine zirconates in liquid form has been found comprising the steps of admixing at least one tetraalkyl zirconate of the formula Zr $(OR_1)_4$ and at least one trialkanolamine of the formula N $(R_2OH)_3$, wherein $R_1$ and $R_2$ are individually alkyl or alkylene respectively having from 1 to 8 carbon atoms, allowing the resultant reaction to proceed in the absence of applied heat and adding water to said reaction product having the formula

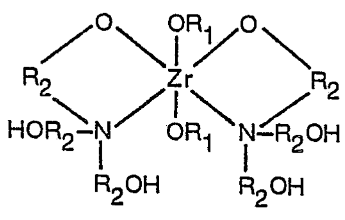

wherein $R_1$ alkyl having from 1 to 8 carbon atoms, including methyl, ethyl, propyl, isopropyl, n-butyl, tert-butyl, sec. butyl, and the like up to octyl. Both $R_1$ and $R_2$ are preferred to have from 1 to 5 carbons, $R_1$ is more preferred to have either 3 or 4 carbons, and $R_2$ is more preferred to have either 2 or 3 carbons. The most preferable compounds according to the invention have $R_1$ = n-propyl or n-butyl and $R_2$ = ethylene (diradical).

It has been found that synthesis of these compounds proceeds readily from the admixture of tetraalkyl zirconates and amine alcohols in solution without applying external heat during the reaction. Molar ratios of 2 to 1.5 (trialkanol amine: zirconate) are preferred the most preferred molor ratio is 2:1.

The stabilized zirconates according to the invention are for immediate utilization in thickening agents in liquid form.

We have found that the likelihood of obtaining liquid product is dramatically enhanced by using the more pure commercially available forms of reactants. Where, for example, the amino alcohol used is triethanolamine (*i.e.*, $R_2 = C_2H_5$), use of the commonly available 85% triethanolamine will almost certainly lead to a solid product, whereas the use of 99% triethanolamine will more likely than not lead to an initially liquid product.

We have further found that the addition of water to the product solution stabilizes the product in liquid form. Water addition on the order of about 3 to 0.5 moles $H_2O$ per mole of zirconium compound has favorable stabilizing effects with the addition of 1 mole $H_2O$ per mole of zirconium compound being

preferred. We suspect that the water results in the formation of a monohydrate of the product zirconate or perhaps even a monohydroxide.

The stabilized bisalkyl bis(trialkanol amine)zirconates of this invention are effective thickening agents for polysaccharides in aqueous solutions, most notably polymers of guar gum and cellulose derivatives. Particularly preferred are hydratable polysaccharides such as galactomannan gums, and derivatives thereof, and cellulose derivatives. Examples of such compounds are guar gum, locust bean gum, karaya gum, sodium carboxymethylguar, hydroxyethylguar, sodium carboxymethylhydroxyethylguar, hydroxypropylguar, sodium carboxymethylhydroxymethylcellulose, sodium carboxymethylhydroxyethylcellulose and hydroxyethylcellulose. The hydroxyethylcellulose derivatives used as gelling agents should be those having from about 0.5 to about 10 moles of ethylene oxide per anhydroglucose unit. The most preferred gelling agent for use in accordance with the present invention is hydroxypropylguar (HPG).

Thickened aqueous solutions as described herein are particularly useful in the oil and gas industry as drilling muds, sands consolidations fluids and fracturing fluids.

The subject stabilized zirconates exhibit enhanced temperature stability when used to thicken galactomannan gums as compared to results with prior art thickening agents, such as the titanates. Thus when utilized as thickening agents for fluids used in resource recovery operations, stabilized zirconates according to the invention may be used in high temperature environments that would destabilize titanate thickening agents. This consideration takes on special significance as recovery operations, especially in the area of oil drilling, are directed to less-readily available sources of materials. The stabilized zirconates may, for example, be used to thicken galactomannan gums for use in fracturing oil wells that are drilled deeper and therefore present a hotter environment for fracturing. Although not yet verified, it is believed that the ΔH of the Zr-O bond being greater than that for the Ti-O bond accounts for this enhanced temperature stability, as well as the fact that the most common coordination numbers for zirconium and titanium are respectively 8 and 6.

Example 1

771.4 g (5.07 Mol) of 99% triethanolamine were placed in a 3-neck, 3-liter r.b. flask. 1209.2 g (2,6 Mol of tetra(n-propyl) zirconate (70% in n-propanol) were rapidly added while stirring the contents of the flask. After the heat of reaction has subsided, 46,6g (2,6 mol) of water were added to ensure that the compound remained a liquid at room temperature.

Example 2

505.6 g (3,3 Mol) of 99% triethanolamine were added to 404.3 g (1,0 mol) tetra(n-butyl)zirconate (80% in n-butanol). The temperature rose to 55°C, the mixture was allowed to cool to room temperature and 15.2 g (0.85 Mol) water were added.

Example 3

To 4.4.3 g (1,0 Mol) tetra(n-butyl)zirconate (80% in n-butanol were added 503.3 g 99% triethanolamine. In the course of addition the solution temperature rose to 55°C. 15,2 g $H_2O$ (0,85 Mol) were then added to stabilize the product as a liquid. The resultant mixture was slightly hazy, the haze persisting even after filtration.

Example 4 (not according to the invention)

Example 3 was repeated using 85% triethanolamine. A precipitate formed after approximately one-half the amino alcohol had been added, resulting in a heterogeneous mixture in which the solid could not be redissolved.

Example 5

0.5 g of the product in Example 1 added to 145 g of a stirred aqueous solution comprising hydrated hydroxypropylguar (HPG), an organic acid, sodium bicarbonate, a surfactant and a bactericide (this HPG formulation is commercially available as NWP—12 from NOWSCO, Inc., Houston, Texas and was here used in a concentration of 50 lbs. per 1000 gal. ~ 8,5 g per liter). The viscosity of the HPG aqueous solution increased from an original value of 510 cp. (51 Pa·s), to 177.000 cp. (17700 Pa·s) in about 30 to 45 seconds.

Example 6

The product of Example 3 was found to thicken an aqueous solution of HPG. Thickening was determined to have occurred as of the onset of the Weisenberg effect, i.e., when the vortex of the stirred solution closed and the solution would begin to climb the stirrer shaft.

As suggested by the preceding material, the mixture of the amino alcohol and tetraalkoxy zirconium compound results in an exothermic reaction. The resulting temperature varies from 0 to 100°C, generally from 25 to 75°C and in the most cases from about 25 to 60°.

## Claims

1. A method for the preparation of stabilized bisalkyl bis-(trialkanol amine) zirconates in liquid form comprising the steps of admixing at least one tetraalkyl zirconate of the formula Zr $(OR_1)_4$ and at least one trialkanolamine of the formula N $(R_2OH)_3$, wherein $R_1$ and $R_2$ are individually alkyl or alkylene respectively having from 1 to 8 carbon atoms, allowing the resultant reaction to proceed in the absence of applied heat and adding water to said reaction product having the formula

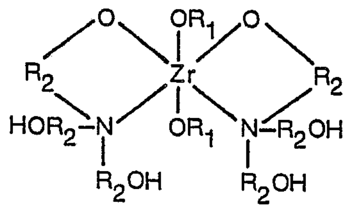

2. A method according to claim 1 wherein the molar ratio of trialkanolamine: zirconate as admixed is 2:1.

3. A method according to claim 1 or 2, wherein one mole of said water is added for each mole of zirconium-compound in said admixture.

4. The use of the products obtained by the processes according to claims 1 to 3 as thickening agents for aqueous polysaccharide solutions.

5. The use of the stabilized bis(n-propyl) bis(triethanol amine) zirconate and bis(n-butyl) bis(triethanol amine) zirconate obtained by the process according to claim 1 as thickening agents for aqueous polysaccharide solutions.

## Patentansprüche

1. Verfahren zur Herstellung von stabilisierten Bis-(alkyl)bis-(tri-alkanolamin)zirkonaten im flüssigen Medium, dadurch gekennzeichnet, daß man mindestens ein Tetraalkylzirkonat der Formel $Zr(OR^1)_4$ und mindestens ein Tri-alkanolamin der Formel $N(R^2OH)_3$, wobei R für Alkyl- oder Alkylengruppen mit 1 bis 4 C-Atomen steht, miteinander vermischt, das entstehende Reaktinsprudukt sich in Abwesenheit von zugeführter Wärme bilden läßt und dem Reaktionsprodukt der Formel

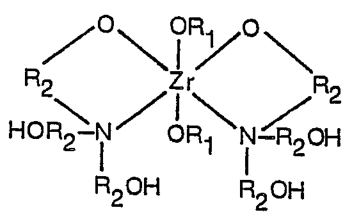

Wasser hinzufügt.

2. Verfahren gemäß Anspruch 1, dadurch gekennzeichnet, daß das Molverhältnis Tri-alkanolamin: Zirkonat in dem Gemisch 2:1 beträgt.

3. Verfahren gemäß Anspruch 1 oder 2, dadurch gekennzeichnet, daß pro Mol Zirkonverbindung 1 Mol Wasser hinzugefügt wird.

4. Verwendung der gemäß den Ansprüchen 1 bis 3 hergestellten Produkte als Verdickungsmittel für wäßrige Polysaccharid-Lösungen.

5. Verwendung von stabilisiertem Bis-(n-propyl)bis(triethanolamin)zirkonat und Bis-(n-butyl)bis(triethanolamin)zirkonat, die gemäß dem Verfahren von Anspruch 1 stabilisiert sind, als Verdickungsmittel für wäßrige Polysaccharid-Lösungen.

## Revendications

1. Méthode de préparation des bis-alcoyle-bis-trialcanoleamine-zirconates stabilés dans un état liquid, caracterisée en ce que l'on mélange au moins un tetraalcoylezirconate repondant à la formule Zr $(OR^1)_4$ et au moins une tri-alcanoleamine repondant à la formule $N(R_2OH)_3$, avec R = alcoyle ou alcényle, en $C_1$—$C_4$,

permettant le produit de réaction resultant de se former en absence de chaleur appliqué et ajoutant de l'eau à ce produit de réaction de la formule

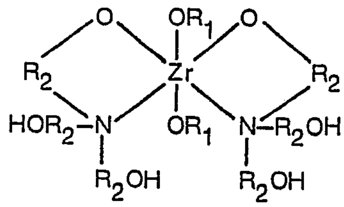

2. Méthode selon la revendication 1, caracterisée en ce que le rapport molaire de tri-alcanoleamine:zirconate, mélangé, est de 2:1.

3. Méthode selon la revendications 1 ou 2, caracterisée en ce que par chaque mol de composé de zirconium dans le mélange un mol d'eau est ajouté.

4. Utilisation des Produits obtenus par le procédé selon les revendications 1 à 3 comme produits d'épaississement pour des solutions aqueuses des polysaccharides.

5. Utilisation des bis-(n-propyl-)-bis(triéthanolamine)zirconates et des bis-(n-butyl-)-bis-(triéthanolamine)zirconates stabilisés, obtenus selon la revendication 1 comme produits d'épaississements pour des solutions aqueous des polysaccharides.